# EUROPÄISCHE PATENTSCHRIFT

(11) **EP 1 625 973 B1**
(45) Veröffentlichungstag und Bekanntmachung des Hinweises auf die Patenterteilung: **01.08.2007**
(21) Anmeldenummer: 05015707.2
(22) Anmeldetag: 20.07.2005
(51) Int. Cl.: B60R 11/02

(54) **Sprachunterstützungssystem für ein Kraftfahrzeug**
Speech support system for motor vehicle
Système de support vocal pour véhicule automobile

(30) Priorität: 10.08.2004 US 600268 P
(43) Veröffentlichungstag der Anmeldung: 15.02.2006
(73) Patentinhaber: Volkswagen Aktiengesellschaft, 38436 Wolfsburg (DE)
(72) Erfinder: Form, Thomas, Prof. Dr., 38102 Braunschweig (DE); Bergmann, Carsten, 95128 San Jose California (US)

(56) Entgegenhaltungen:
- WO-A-02/092392
- DE-A1- 19 958 836
- PATENT ABSTRACTS OF JAPAN Bd. 015, Nr. 106 (E-1044), 13. März 1991 (1991-03-13) & JP 02 312349 A (FUJITSU TEN LTD), 27. Dezember 1990 (1990-12-27)
- PATENT ABSTRACTS OF JAPAN Bd. 1995, Nr. 01, 28. Februar 1995 (1995-02-28) & JP 06 296158 A (CLARION CO LTD), 21. Oktober 1994 (1994-10-21)

## Beschreibung

Die Erfindung betrifft ein Sprachunterstützungssystem für ein Kraftfahrzeug nach den Oberbegriffen der Ansprüche 1 bzw. 2.

Ein solches System ist aus der DE 199 58 836 A1 bekannt. So offenbart die DE 199 58 836 A1 ein Verfahren zur Kommunikation in einem Fahrzeug, wobei die Sprachsignale der Insassen eines Fahrzeugs für jeden Insassen einzeln über ein ihm im Rahmen seines Sitzplatzes zugeordnetes Mikrofon aufgenommen werden, wobei die aufgenommenen Sprachsignale für jeden Insassen getrennt in einer Eingangsstufe verstärkt und zur Startpegelminimierung und Frequenzanpassung gefiltert werden, wobei die verstärkten und gefilterten Sprachsignale jedes einzelnen Insassen zur Aufteilung auf die Ausgangskanäle und damit zur Aufteilung auf die einzelnen Komponenten einer aus Lautsprechern bestehenden Sprachausgabeeinrichtung in einer Prozessstufe in Abhängigkeit der örtlichen Zuordnung des Mikrofons im Fahrzeug, über welches das Sprachsignal aufgenommen wurde, und in Abhängigkeit der örtlichen Zuordnung jedes einzelnen Lautsprechers der Sprachausgabeeinrichtung im Fahrzeug, über die das Sprachsignal ausgegeben werden soll, über eine Summier- und Verteilstufe einer für jeden Ausgangskanal individuellen Signalverarbeitung in Form einer Laufzeitkorrektur und einer Pegeldifferenzierung unterzogen werden, und wobei die Zuordnung des für jeden Ausgangskanal individuell verarbeiteten Sprachsignals zu den einzelnen Ausgangskanälen und damit zu den einzelnen Lautsprechern der Sprachausgabeeinrichtung über eine Anpassstufe erfolgt, in der über eine Pegelanpassung und eine Frequenzanpassung eine auf jeden Ausgangskanal und damit auf jeden Lautsprecher der Sprachausgabeeinrichtung abgestimmte Anpassung des jeweiligen Sprachsignals an die räumlichen Bedingungen des Fahrzeugs und die gewünschte Lautstärke erfolgt.
Aus der US 6 505 057 B1 ist zudem ein Sprachunterstützungssystem mit einer Telefonanbindung bekannt.

Es ist Aufgabe der Erfindung, ein verbessertes Sprachunterstützungssystem für ein Kraftfahrzeug anzugeben. Dabei ist es insbesondere wünschenswert, das Telefonieren in einem Kraftfahrzeug zu verbessern.

Vorgenannte Aufgabe wird durch ein Sprachunterstützungssystem für ein Kraftfahrzeug mit einem ersten Mikrofon, einem zweiten Mikrofon und einem dritten Mikrofon sowie mit einem ersten Lautsprecher, einem zweiten Lautsprecher und einem dritten Lautsprecher gelöst, wobei mittels des Sprachunterstützungssystems, insbesondere gleichzeitig, je ein Kommunikationspfad vom ersten Mikrofon zum zweiten Lautsprecher und/oder vom ersten Mikrofon zum dritten Lautsprecher, sowie vom zweiten Mikrofon zum dritten Lautsprecher und vom dritten Mikrofon zum zweiten Lautsprecher aufrecht erhaltbar ist, und wobei mittels des Sprachunterstützungssystems wahlweise unter Aufrechterhaltung des Kommunikationspfades vom zweiten Mikrofon zum dritten Lautsprecher und des Kommunikationspfades vom dritten Mikrofon zum zweiten Lautsprecher ein Kommunikationspfad vom ersten Mikrofon zu einem Telefon und von dem Telefon zum ersten Lautsprecher aufrecht erhaltbar ist.

Vorgenannte Aufgabe wird zudem durch ein Sprachunterstützungssystem für ein zumindest einen ersten Sitz, einen zweiten Sitz und einen dritten Sitz aufweisendes Kraftfahrzeug gelöst, wobei dem ersten Sitz ein erster Lautsprecher und ein erstes Mikrofon, dem zweiten Sitz ein zweiter Lautsprecher und ein zweites Mikrofon und dem dritten Sitz ein dritter Lautsprecher und ein drittes Mikrofon zugeordnet ist, wobei mittels des Sprachunterstützungssystems ein von dem ersten Mikrofon aufnehmbares erstes Mikrofonsignal an den zweiten Lautsprecher, an den dritten Lautsprecher oder an den zweiten Lautsprecher und den dritten Lautsprecher ausgebbar ist, wobei mittels des Sprachunterstützungssystems ein von dem zweiten Mikrofon aufnehmbares zweites Mikrofonsignal an den ersten Lautsprecher, an den dritten Lautsprecher oder an den ersten Lautsprecher und den dritten Lautsprecher ausgebbar ist, wobei mittels des Sprachunterstützungssystems ein von dem dritten Mikrofon aufnehmbares drittes Mikrofonsignal an den zweiten Lautsprecher, an den ersten Lautsprecher oder an den zweiten Lautsprecher und den ersten Lautsprecher ausgebbar ist, wobei mittels des Sprachunterstützungssystems wahlweise das erste Mikrofonsignal an ein Telefon und ein von dem Telefon ausgebbares Telefonsignal an den ersten Lautsprecher ausgebbar ist, wobei das zweite Mikrofonsignal an den dritten Lautsprecher, insbesondere nicht jedoch an den ersten Lautsprecher, ausgebbar ist, und wobei das dritte Mikrofonsignal an den zweiten Lautsprecher, insbesondere nicht jedoch an den ersten Lautsprecher, ausgebbar ist.

In vorteilhafter Ausgestaltung der Erfindung ist mittels des Sprachunterstützungssystems wahlweise das zweite Mikrofonsignal an das Telefon und das von dem Telefon ausgebbare Telefonsignal an den zweiten Lautsprecher ausgebbar, wobei das erste Mikrofonsignal an den dritten Lautsprecher, insbesondere nicht jedoch an den zweiten Lautsprecher, ausgebbar ist, und wobei das dritte Mikrofonsignal an den ersten Lautsprecher, insbesondere nicht jedoch an den zweiten Lautsprecher, ausgebbar ist.

In weiterhin vorteilhafter Ausgestaltung der Erfindung ist mittels des Sprachunterstützungssystems wahlweise das dritte Mikrofonsignal an das Telefon und das von dem Telefon ausgebbare Telefonsignal an den dritten Lautsprecher ausgebbar, wobei das erste Mikrofonsignal an den zweiten Lautsprecher, insbesondere nicht jedoch an den dritten Lautsprecher, ausgebbar ist, und wobei das zweite Mikrofonsignal an den ersten Lautsprecher, insbesondere nicht jedoch an den dritten Lautsprecher, ausgebbar ist.

In weiterhin vorteilhafter Ausgestaltung der Erfindung umfasst das Sprachunterstützungssystem ein Bedienelement zum wahlweisen Verbinden des ersten Mikrofons und des ersten Lautsprechers mit dem Telefon, zum wahlweisen Verbinden des zweiten Mikrofons und des zweiten Lautsprechers mit dem Telefon und/oder zum wahlweisen Verbinden des dritten Mikrofons und des dritten Lautsprechers mit dem Telefon.

In weiterhin vorteilhafter Ausgestaltung der Erfindung ist mittels des Sprachunterstützungssystems eine haptische, optische und/oder akustische Bestätigung einer erfolgreichen Bedienung des Bedienelementes erzeugbar.

Ein Sprachunterstützungssystem im Sinne der Erfindung soll insbesondere eine Kommunikations- bzw. Sprech-/Gegensprecheinrichtung sein oder umfassen.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Innenansicht eines Kraftfahrzeuges,
- Fig. 2: ein Sprachunterstützungssystem in einem ersten Zustand,
- Fig. 3: das Sprachunterstützungssystem gemäß Fig. 2 in einem zweiten Zustand und
- Fig. 4: das Sprachunterstützungssystem gemäß Fig. 2 in einem dritten Zustand.

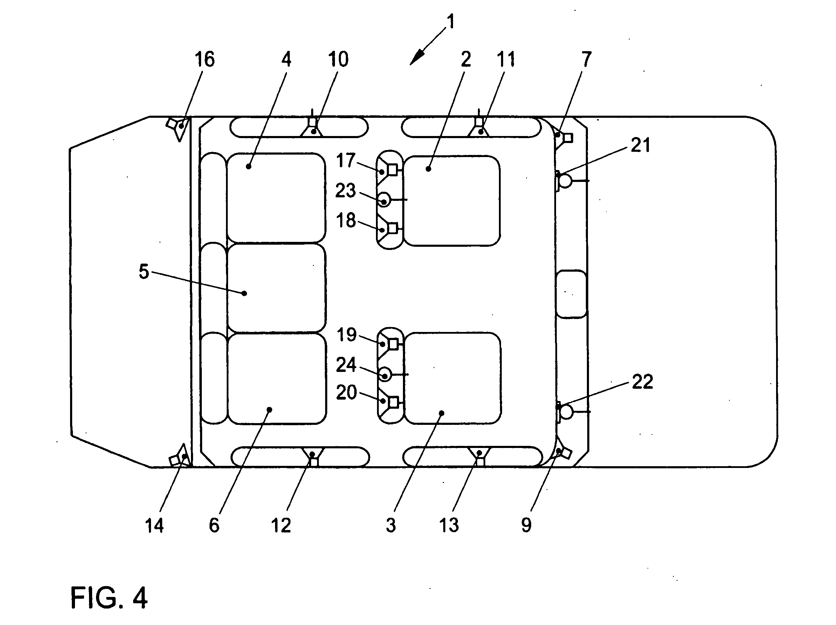

Fig. 1 zeigt die Innenansicht eines Kraftfahrzeuges 1 von oben. Dabei bezeichnen Bezugszeichen 2 und 3 die Vordersitze und Bezugszeichen 4, 5 und 6 die Rücksitze des Kraftfahrzeuges 1. Bezugszeichen 7, 9, 10, 11, 12, 13, 14, 16, 17, 18, 19 und 20 bezeichnen Lautsprecher. Bezugszeichen 21, 22, 23 und 24 bezeichnen Mikrofone. Die Lautsprecher 7, 9, 10, 11, 12, 13, 14, 16, 17, 18, 19 und 20 gehören teilweise zu einer Musikanlage und teilweise zu einem Sprachunterstützungssystem. Sie können auch von beiden Systemen genutzt werden. Dem Vordersitz 2 sind das Mikrofon 21 und die Lautsprecher 7 oder/und 11 zugeordnet. Dem Vordersitz 3 sind das Mikrofon 22 und die Lautsprecher 9 oder/und 13 zugeordnet. Dem Rücksitz 4 sind das Mikrofon 23 und die Lautsprecher 10, 16, 17 oder/und 18 zugeordnet. Dem Rücksitz 6 sind das Mikrofon 24 und die Lautsprecher 12, 14, 19 oder/und 20 zugeordnet. Es kann auch ein entsprechend angepasstes Sprachunterstützungssystem vorgesehen werden, dass den Rücksitz 5 mit einbezieht. Es kann auch ein entsprechend angepasstes Sprachunterstützungssystem zur Einbeziehung weiterer Sitzreihen vorgesehen werden.

Die Mikrofone 21, 22, 23 und 24 können an rückwärtigen Seiten eines Sitzes, am Armaturenbrett oder im Dachhimmel angeordnet sein.

Das Sprachunterstützungssystem verbessert die verbale Kommunikation zwischen Insassen des Kraftfahrzeuges durch Aufnahme von Sprache mittels der Mikrofone 21, 22, 23 und 24 und (ggf. verstärkte und/oder gefilterte) Ausgabe durch die Lautsprecher 7, 9, 10, 11, 12, 13, 14, 16, 17, 18, 19 und 20 oder eines Teils der Lautsprecher 7, 9, 10, 11, 12, 13, 14, 16, 17, 18, 19 und 20. Das Prinzip von Sprachunterstützungssystemen offenbaren u. a. die DE 199 58 836 A1 und die US 6 505 057 B1.

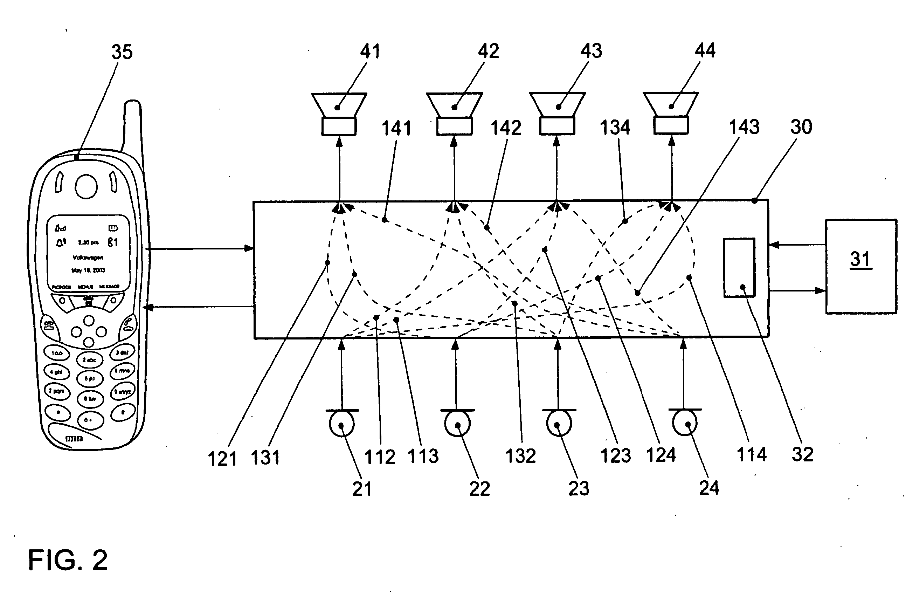

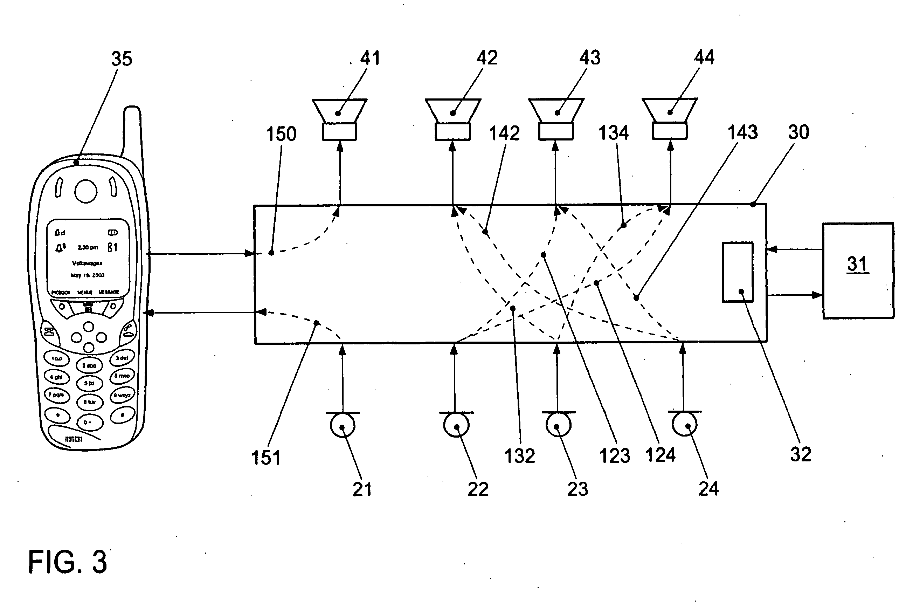

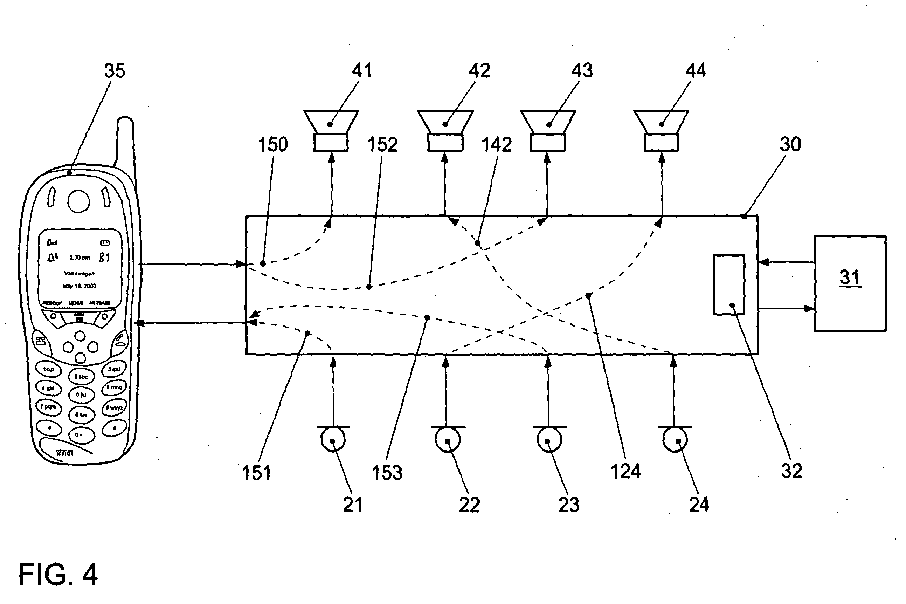

Fig. 2 zeigt das Sprachunterstützungssystem in einem ersten Zustand, Fig. 3 zeigt das Sprachunterstützungssystem in einem zweiten Zustand und Fig. 4 zeigt das Sprachunterstützungssystem in einem dritten Zustand. Das Sprachunterstützungssystem umfasst eine Sprachsteuerung 30, die mit den Mikrofonen 21, 22, 23 und 24 verbunden ist. Zudem ist die Sprachsteuerung 30 mit einigen oder allen Lautsprechern 7, 9, 10, 11, 12, 13, 14, 16, 17, 18, 19 und 20 verbunden. In Fig. 2 symbolisiert dabei ein mit Bezugszeichen 41 bezeichneter Lautsprecher Lautsprecher 7 oder/und 11, ein mit Bezugszeichen 42 bezeichneter Lautsprecher Lautsprecher 9 oder/und 13, ein mit Bezugszeichen 43 bezeichneter Lautsprecher Lautsprecher 10, 16, 17 oder/und 18 und ein mit Bezugszeichen 44 bezeichneter Lautsprecher Lautsprecher 12, 14, 19 oder/und 20.

In dem ersten Zustand hält die Sprachsteuerung 30 und damit das Sprachunterstützungssystem einen Kommunikationspfad 112 von dem Mikrofon 21 zu dem Lautsprecher 42, einen Kommunikationspfad 113 von dem Mikrofon 21 zu dem Lautsprecher 43, einen Kommunikationspfad 114 von dem Mikrofon 21 zu dem Lautsprecher 44, einen Kommunikationspfad 121 von dem Mikrofon 22 zu dem Lautsprecher 41, einen Kommunikationspfad 123 von dem Mikrofon 22 zu dem Lautsprecher 43, einen Kommunikationspfad 124 von dem Mikrofon 22 zu dem Lautsprecher 44, einen Kommunikationspfad 131 von dem Mikrofon 23 zu dem Lautsprecher 41, einen Kommunikationspfad 132 von dem Mikrofon 23 zu dem Lautsprecher 42, einen Kommunikationspfad 134 von dem Mikrofon 23 zu dem Lautsprecher 44, einen Kommunikationspfad 141 von dem Mikrofon 24 zu dem Lautsprecher 41, einen Kommunikationspfad 142 von dem Mikrofon 24 zu dem Lautsprecher 42, und einen Kommunikationspfad 143 von dem Mikrofon 24 zu dem Lautsprecher 43 aufrecht. Dass heißt, ein von dem Mikrofon 21 aufgenommenes Mikrofonsignal (Sprachsignal bzw. akustisches Signal) wird von den Lautsprechern 42, 43 und 44 ausgegeben, ein von dem Mikrofon 22 aufgenommenes Mikrofonsignal (Sprachsignal bzw. akustisches Signal) wird von den Lautsprechern 41, 43 und 44 ausgegeben, ein von dem Mikrofon 23 aufgenommenes Mikrofonsignal (Sprachsignal bzw. akustisches Signal) wird von den Lautsprechern 41, 42 und 44 ausgegeben, und ein von dem Mikrofon 24 aufgenommenes Mikrofonsignal (Sprachsignal bzw. akustisches Signal) wird von den Lautsprechern 41, 42 und 43 ausgegeben.

Die Sprachsteuerung 30 ist in Fig. 2, Fig. 3 und Fig. 4 vereinfacht dargestellt. So umfasst die Sprachsteuerung 30 nicht dargestellte Filter und/oder Verstärker. Zudem ist eine nicht dargestellte Rückkopplungskompensation und/oder eine Störgeräuschunterdrückung vorgesehen. Ausführungsbeispiele für derartige Systeme, die in der Sprachsteuerung 30 implementiert sein können, sowie insbesondere weitere Sprachunterstützungssysteme sind z.B. in der EP 0078014 B1, der WO 97/34290, der DE 197 05 471 A1, der DE 41 06 405 C2, der DE 199 58 836 A1, der DE 39 25 589 A1, der EP 1 077 013 B1, der WO 02/069487 und der WO 02/21817 offenbart.

Dem Sprachunterstützungssystem ist ein Telefon 35 zugeordnet. Das Telefon 35 kann ein mit der Sprachsteuerung 30, z.B. mittels einer Bluetooth-Schnittstelle, verbindbares Mobiltelefon oder ein fest in das Kraftfahrzeug 1 integriertes Telefon sein. Das Telefon 35 kann auch in die Sprachsteuerung 30 integriert sein.

Das Sprachunterstützungssystem weist zudem ein Bedienelement 31 zur Zuordnung eines Telefongespräches zu einem oder mehreren der Sitze 2, 3, 4 und 6 des Kraftfahrzeuges 1 auf. Will z.B. eine den Vordersitz 2 belegende Person das Telefon 35 nutzen, so kann diese Person ein Telefongespräch von dem Vordersitz 2 aus durch Bedienung des Bedienelementes 31 führen. In diesem Fall geht das Sprachunterstützungssystem von dem in Fig. 2 dargestellten ersten Zustand in den in Fig. 3 dargestellten zweiten Zustand über. Dabei werden die Kommunikationspfade 112, 113, 114, 121, 131 und 141 unterbrochen und unter Aufrechterhaltung der Kommunikationspfade 123, 124, 132, 134, 142 und 143 ein Kommunikationspfad 151 von dem Mikrofon 21 zu dem Telefon 35 und ein Kommunikationspfad 150 von dem Telefon 35 zu dem Lautsprecher 41 aufgebaut und aufrecht erhalten. Auf diese Weise wird die Infrastruktur des Sprachunterstützungssystem in Bezug auf den Vordersitz 2 als Freisprecheinrichtung unter Beibehaltung der Sprachunterstützung in Bezug auf die Sitze 3, 4 und 6 genutzt. In vorteilhafter Ausgestaltung ist eine haptische, optische und/oder akustische Bestätigung einer erfolgreichen Bedienung des Bedienelementes 31 erzeugbar. So kann z.B. das Bedienelement 31 eine haptische Rückmeldung erzeugen. Alternativ oder zusätzlich kann dem Bedienelement eine Leuchte oder Anzeige zugeordnet sein, die (z.B. als blinkende LED) anzeigt, dass die Kommunikationspfade 150 und 151 bestehen. Weiterhin alternativ oder zusätzlich kann mittels des Lautsprechers 41 eine akustische Bestätigung, z.B. als Knacken, abgegeben werden.

Alternativ oder zusätzlich zum Bedienelement 31 kann eine akustische Befehlserkennung 32 zur Erkennung akustischer Befehle vorgesehen sein. So kann vorgesehen sein, dass das Sprachunterstützungssystem von dem in Fig. 2 dargestellten ersten Zustand in den in Fig. 3 dargestellten zweiten Zustand übergeht, wenn von dem Mikrofon der akustische Befehl 'TELEFON' aufgenommen wird.

Es können weitere dem Bedienelement 31 entsprechende Bedienelemente vorgesehen werden, mittels derer auch Personen auf anderen Sitzen 3, 4 bzw. 6 das Telefon 35 alternativ oder zusätzlich in vorgenannter Weise nutzen können.

So kann vorgesehen sein, dass eine Person auf dem Vordersitz 3 durch Bedienung eines entsprechenden Bedienelementes das Telefon 35 allein nutzen kann. In diesem Fall werden die Kommunikationspfade 121, 123, 124, 112, 132 und 142 unterbrochen und unter Aufrechterhaltung der Kommunikationspfade 113, 114, 131, 134, 141 und 143 ein Kommunikationspfad von dem Mikrofon 22 zu dem Telefon 35 und von dem Telefon 35 zum Lautsprecher 42 aufgebaut und aufrecht erhalten. Auf diese Weise wird die Infrastruktur des Sprachunterstützungssystems in Bezug auf den Vordersitz 3 als Freisprecheinrichtung unter Beibehaltung der Sprachunterstützung in Bezug auf die Sitze 2, 4 und 6 genutzt. Entsprechend kann auch in Bezug auf den Rücksitz 4 und den Rücksitz 6 verfahren werden.

Es ist zudem möglich, dass alle Insassen des Fahrzeugs an einem Telefongespräch teilnehmen. Es ist zudem möglich, dass mehrere Insassen des Fahrzeugs an einem Telefongespräch teilnehmen, während andere das Sprachunterstützungssystem zur Sprachunterstützung nutzen.

Will z.B. eine den Rücksitz 4 belegende Person an dem unter Bezugnahme auf Fig. 3 beschriebenen Telefongespräch teilnehmen, so kann diese Person in das dem Vordersitz 2 zugeordnete Telefongespräch durch Bedienung des Bedienelementes 31 oder eines entsprechenden Bedienelementes einbezogen werden. In diesem Fall geht das Sprachunterstützungssystem von dem in Fig. 3 dargestellten zweiten Zustand in den in Fig. 4 dargestellten dritten Zustand über. Dabei werden zusätzlich zu den unterbrochenen Kommunikationspfaden 112, 113, 114, 121, 131 und 141 die Kommunikationspfade 123, 132, 134 und 143 unterbrochen und unter Aufrechterhaltung der Kommunikationspfade 124 und 142 ein Kommunikationspfad 153 von dem Mikrofon 23 zu dem Telefon 35 und ein Kommunikationspfad 152 von dem Telefon 35 zu dem Lautsprecher 43 aufgebaut und aufrecht erhalten. Auf diese Weise wird die Infrastruktur des Sprachunterstützungssystem in Bezug auf den Vordersitz 2 und den Rücksitz 4 als Freisprecheinrichtung unter Beibehaltung der Sprachunterstützung in Bezug auf den Vordersitz 3 und den Rücksitz 6 genutzt. In vorteilhafter Ausgestaltung ist eine haptische, optische und/oder akustische Bestätigung bei einer erfolgreichen Bedienung des Bedienelementes erzeugbar.

Die Kommunikationspfade 112, 113, 114 und 151 geben den Weg eines von dem Mikrofon 21 aufnehmbaren Mikrofonsignals durch die Sprachsteuerung 30 an. Die Kommunikationspfade 121, 123, 124, und 153 geben den Weg eines von dem Mikrofon 22 aufnehmbaren Mikrofonsignals durch die Sprachsteuerung 30 an. Die Kommunikationspfade 131, 132 und 134 geben den Weg eines von dem Mikrofon 23 aufnehmbaren Mikrofonsignals durch die Sprachsteuerung 30 an. Die Kommunikationspfade 141, 142 und 143 geben den Weg eines von dem Mikrofon 24 aufnehmbaren Mikrofonsignals durch die Sprachsteuerung 30 an. Die Kommunikationspfade150 und 152 geben den Weg eines von dem Telefon 35 erzeugbaren Telefonsignals durch die Sprachsteuerung 30 an.

Die Elemente in den Figuren sind unter Berücksichtigung von Einfachheit und Klarheit und nicht notwendigerweise maßstabsgetreu gezeichnet. So sind z.B. die Größenordnungen einiger Elemente übertrieben gegenüber anderen Elementen dargestellt, um das Verständnis der Ausführungsbeispiele der vorliegenden Erfindung zu verbessern.

### BEZUGSZEICHENLISTE

- 1: Kraftfahrzeug
- 2, 3, 4, 5, 6: Sitz
- 7, 9, 10, 11, 12,:
- 13, 14, 16, 17,:
- 18, 19, 20, 41,:
- 42, 43, 44: Lautsprecher
- 21, 22, 23, 24: Mikrofon
- 30: Sprachsteuerung
- 31: Bedienelement
- 32: Befehlserkennung
- 35: Telefon
- 112, 113, 114,:
- 121, 123, 124,:
- 131, 132, 134,:
- 141, 142, 143,:
- 150, 151, 152,:
- 153: Kommunikationspfad

## Patentansprüche

1. Sprachunterstützungssystem für ein Kraftfahrzeug (1) mit einem ersten Mikrofon (21), einem zweiten Mikrofon (22) und einem dritten Mikrofon (23) sowie mit einem ersten Lautsprecher (41), einem zweiten Lautsprecher (42) und einem dritten Lautsprecher (43), wobei mittels des Sprachunterstützungssystems je ein Kommunikationspfad (112, 113, 123, 132) vom ersten Mikrofon (21) zum zweiten Lautsprecher (42) und/oder vom ersten Mikrofon (21) zum dritten Lautsprecher (43), sowie vom zweiten Mikrofon (22) zum dritten Lautsprecher (43) und vom dritten Mikrofon (23) zum zweiten Lautsprecher (42) aufrecht erhaltbar ist, **dadurch gekennzeichnet, dass** mittels des Sprachunterstützungssystems wahlweise unter Aufrechterhaltung des Kommunikationspfades (123) vom zweiten Mikrofon (22) zum dritten Lautsprecher (43) und des Kommunikationspfades (132) vom dritten Mikrofon (23) zum zweiten Lautsprecher (42) ein Kommunikationspfad (151) vom ersten Mikrofon (21) zu einem Telefon (35) und ein Kommunikationspfad (150) von dem Telefon (35) zum ersten Lautsprecher (41) aufrecht erhaltbar ist.

2. Sprachunterstützungssystem für ein zumindest einen ersten Sitz (2), einen zweiten Sitz (3) und einen dritten Sitz (4) aufweisendes Kraftfahrzeug (1), wobei dem ersten Sitz (2) ein erster Lautsprecher (41) und ein erstes Mikrofon (21), dem zweiten Sitz ein zweiter Lautsprecher (42) und ein zweites Mikrofon (22) und dem dritten Sitz ein dritter Lautsprecher (43) und ein drittes Mikrofon (23) zugeordnet ist, wobei mittels des Sprachunterstützungssystems ein von dem ersten Mikrofon (21) aufnehmbares erstes Mikrofonsignal an den zweiten Lautsprecher (42), an den dritten Lautsprecher (43) oder an den zweiten Lautsprecher (42) und den dritten Lautsprecher (43) ausgebbar ist, wobei mittels des Sprachunterstützungssystems ein von dem zweiten Mikrofon (22) aufnehmbares zweites Mikrofonsignal an den ersten Lautsprecher (41), an den dritten Lautsprecher (43) oder an den ersten Lautsprecher (41) und den dritten Lautsprecher (43) ausgebbar ist, und wobei mittels des Sprachunterstützungssystems ein von dem dritten Mikrofon (23) aufnehmbares drittes Mikrofonsignal an den zweiten Lautsprecher (42), an den ersten Lautsprecher (41) oder an den zweiten Lautsprecher (42) und den ersten Lautsprecher (41) ausgebbar ist, **dadurch gekennzeichnet, dass** mittels des Sprachunterstützungssystems wahlweise das erste Mikrofonsignal an ein Telefon (35) und ein von dem Telefon (35) ausgebbares Telefonsignal an den ersten Lautsprecher (41) ausgebbar ist, wobei das zweite Mikrofonsignal an den dritten Lautsprecher (43), insbesondere nicht jedoch an den ersten Lautsprecher (41), ausgebbar ist, und wobei das dritte Mikrofonsignal an den zweiten Lautsprecher (42), insbesondere nicht jedoch an den ersten Lautsprecher (41), ausgebbar ist.

3. Sprachunterstützungssystem nach Anspruch 1, **dadurch gekennzeichnet, dass** mittels des Sprachunterstützungssystems wahlweise das zweite Mikrofonsignal an das Telefon (35) und das von dem Telefon (35) ausgebbare Telefonsignal an den zweiten Lautsprecher (42) ausgebbar ist, wobei das erste Mikrofonsignal an den dritten Lautsprecher (43), insbesondere nicht jedoch an den zweiten Lautsprecher (42), ausgebbar ist, und wobei das dritte Mikrofonsignal an den ersten Lautsprecher (41), insbesondere nicht jedoch an den zweiten Lautsprecher (42), ausgebbar ist.

4. Sprachunterstützungssystem nach Anspruch 1 oder 2, **dadurch gekennzeichnet, dass** mittels des Sprachunterstützungssystems wahlweise das dritte Mikrofonsignal an das Telefon (35) und das von dem Telefon (35) ausgebbare Telefonsignal an den dritten Lautsprecher (43) ausgebbar ist, wobei das erste Mikrofonsignal an den zweiten Lautsprecher (42), insbesondere nicht jedoch an den dritten Lautsprecher (43), ausgebbar ist, und wobei das zweite Mikrofonsignal an den ersten Lautsprecher (41), insbesondere nicht jedoch an den dritten Lautsprecher (43), ausgebbar ist.

5. Sprachunterstützungssystem nach einem der vorhergehenden Ansprüche, **dadurch gekennzeichnet, dass** ein Bedienelement (31, 32) zum wahlweisen Verbinden des ersten Mikrofons (21) und des ersten Lautsprechers (41) mit dem Telefon (35), zum wahlweisen Verbinden des zweiten Mikrofons (22) und des zweiten Lautsprechers (42) mit dem Telefon (35) und/oder zum wahlweisen Verbinden des dritten Mikrofons (23) und des dritten Lautsprechers (43) mit dem Telefon (35) umfasst.

6. Sprachunterstützungssystem nach Anspruch 5, **dadurch gekennzeichnet, dass** mittels des Sprachunterstützungssystems eine haptische, optische und/oder akustische Bestätigung einer erfolgreichen Bedienung des Bedienelementes (31, 32) erzeugbar ist.

## Claims

1. Speech support system for a motor vehicle (1) having a first microphone (21), a second microphone (22) and a third microphone (23) as well as having a first loudspeaker (41), a second loudspeaker (42) and a third loudspeaker (43), wherein by means of the speech support system it is possible to maintain in each case a communications path (112, 113, 123, 132) from the first microphone (21) to the second loudspeaker (42) and/or from the first microphone (21) to the third loudspeaker (43), as well as from the second microphone (22) to the third loudspeaker (43) and from the third microphone (23) to the second loudspeaker (42), **characterized in that** by means of the speech support system it is possible to maintain a communications path (151) from the first microphone (21) to a telephone (35) and a communications path (150) from the telephone (35) to the first loudspeaker (41) while optionally maintaining the communications path (123) from the second microphone (22) to the third loudspeaker (43), and the communications path (132) from the third microphone (23) to the second loudspeaker (42).

2. Speech support system for a motor vehicle (1) which has at least a first seat (2), a second seat (3) and a third seat (4), wherein a first loudspeaker (41) and a first microphone (21) are assigned to the first seat (2), a second loudspeaker (42) and a second microphone (22) are assigned to the second seat, and a third loudspeaker (43) and a third microphone (23) are assigned to the third seat, wherein by means of the speech support system it is possible to output a first microphone signal, which can be picked up by the first microphone (21), to the second loudspeaker (42), to the third loudspeaker (43) or to the second loudspeaker (42) and the third loudspeaker (43), wherein by means of the speech support system it is possible to output a second microphone signal, which can be picked up by the second microphone (22), to the first loudspeaker (41), to the third loudspeaker (43) or to the first loudspeaker (41) and the third loudspeaker (43), and wherein by means of the speech support system it is possible to output a third microphone signal, which can be picked up by the third microphone (23), to the second loudspeaker (42), to the first loudspeaker (41) or to the second loudspeaker (42) and the first loudspeaker (41), **characterized in that** by means of the speech support system it is possible optionally to output the first microphone signal to a telephone (35) and to output to the first loudspeaker (41) a telephone signal which can be output by the telephone (35), wherein the second microphone signal can be output to the third loudspeaker (43), but not in particular to the first loudspeaker (41), and wherein the third microphone signal can be output to the second loudspeaker (42), but not in particular to the first loudspeaker (41).

3. Speech support system according to Claim 1, **characterized in that** by means of the speech support system it is possible optionally to output the second microphone signal to the telephone (35), and to output to the second loudspeaker (42) the telephone signal which can be output by the telephone (35), wherein the first microphone signal can be output to the third loudspeaker (43), but in particular not to the second loudspeaker (42), and wherein the third microphone signal can be output to the first loudspeaker (41), but in particular not to the second loudspeaker (42).

4. Speech support system according to Claim 1 or 2, **characterized in that** by means of the speech support system it is possible optionally to output the third microphone signal to the telephone (35), and to output to the third loudspeaker (43) the telephone signal which can be output via the telephone (35), wherein the first microphone signal can be output to the second loudspeaker (42), but in particular not to the third loudspeaker (43), and wherein the second microphone signal can be output to the first loudspeaker (41), but in particular not to the third loudspeaker (43).

5. Speech support system according to one of the preceding claims, **characterized in that** it comprises an operator control element (31, 32) for optionally connecting the first microphone (21) and the first loudspeaker (41) to the telephone (35), for optionally connecting the second microphone (22) and the second loudspeaker (42) to the telephone (35) and/or for optionally connecting the third microphone (23) and the third loudspeaker (43) to the telephone (35).

6. Speech support system according to Claim 5, **characterized in that** by means of the speech support system it is possible to generate a haptic, optical and/or acoustic confirmation of successful use of the operator control element (31, 32).

## Revendications

1. Système d'assistance vocale pour un véhicule automobile (1) comprenant un premier microphone (21), un deuxième microphone (22) et un troisième microphone (23) ainsi qu'un premier haut-parleur (41), un deuxième haut-parleur (42) et un troisième haut-parleur (43), un trajet de communication (112, 113, 123, 132) pouvant être maintenu au moyen du système d'assistance vocale respectivement du premier microphone (21) vers le deuxième haut-parleur (42) et/ou du premier microphone (21) vers le troisième haut-parleur (43) ainsi que du deuxième microphone (22) vers le troisième haut-parleur (43) et du troisième microphone (23) vers le deuxième haut-parleur (42), **caractérisé en ce qu'**un trajet de communication (151) peut être maintenu au moyen du système d'assistance vocale du premier microphone (21) vers un téléphone (35) et un trajet de communication (150) du téléphone (35) vers le premier haut-parleur (41) en maintenant, au choix, le trajet de communication (123) du deuxième microphone (22) vers le troisième haut-parleur (43) et le trajet de communication (132) du troisième microphone (23) vers le deuxième haut-parleur (42).

2. Système d'assistance vocale pour un véhicule automobile (1) présentant au moins un premier siège (2), un deuxième siège (3) et un troisième siège (4), un premier haut-parleur (41) et un premier microphone (21) étant associés au premier siège (2), un deuxième haut-parleur (42) et un deuxième microphone (22) étant associés au deuxième siège et un troisième haut-parleur (43) et un troisième microphone (23) étant associés au troisième siège, un premier signal de microphone enregistrable par le premier microphone (21) pouvant être délivré sur le deuxième haut-parleur (42), sur le troisième haut-parleur (43) ou encore sur le deuxième haut-parleur (42) et sur le troisième haut-parleur (43) au moyen du système d'assistance vocale, un deuxième signal de microphone enregistrable par le deuxième microphone (22) pouvant être délivré sur le premier haut-parleur (41), sur le troisième haut-parleur (43) ou encore sur le premier haut-parleur (41) et sur le troisième haut-parleur (43) au moyen du système d'assistance vocale et un troisième signal de microphone enregistrable par le troisième microphone (23) pouvant être délivré sur le deuxième haut-parleur (42), sur le premier haut-parleur (41) ou encore sur le deuxième haut-parleur (42) et sur le premier haut-parleur (41) au moyen du système d'assistance vocale, **caractérisé en ce qu'**au moyen du système d'assistance vocale, le premier signal de microphone peut, au choix, être délivré à un téléphone (35) et un signal de téléphone pouvant être délivré par le téléphone (35) peut être délivré sur le premier haut-parleur (41), le deuxième signal de microphone pouvant être délivré sur le troisième haut-parleur (43), mais notamment pas sur le premier haut-parleur (41), et le troisième signal de microphone pouvant être délivré sur le deuxième haut-parleur (42), mais notamment pas sur le premier haut-parleur (41).

3. Système d'assistance vocale selon la revendication 1, **caractérisé en ce qu'**au moyen du système d'assistance vocale, le deuxième signal de microphone peut, au choix, être délivré au téléphone (35) et le signal de téléphone pouvant être délivré par le téléphone (35) peut être délivré sur le deuxième haut-parleur (42), le premier signal de microphone pouvant être délivré sur le troisième haut-parleur (43), mais notamment pas sur le deuxième haut-parleur (42), et le troisième signal de microphone pouvant être délivré sur le premier haut-parleur (41), mais notamment pas sur le deuxième haut-parleur (42).

4. Système d'assistance vocale selon la revendication 1 ou 2, **caractérisé en ce qu'**au moyen du système d'assistance vocale, le troisième signal de microphone peut; au choix, être délivré au téléphone (35) et le signal de téléphone pouvant être délivré par le téléphone (35) peut être délivré sur le troisième haut-parleur (43), le premier signal de microphone pouvant être délivré sur le deuxième haut-parleur (42), mais notamment pas sur le troisième haut-parleur (43), et le deuxième signal de microphone pouvant être délivré sur le premier haut-parleur (41), mais notamment pas sur le troisième haut-parleur (43).

5. Système d'assistance vocale selon l'une des revendications précédentes, **caractérisé en ce qu'**il comprend un élément de commande (31, 32) pour relier au choix le premier microphone (21) et le premier haut-parleur (41) avec le téléphone (35), pour relier au choix le deuxième microphone (22) et le deuxième haut-parleur (42) avec le téléphone (35) et/ou pour relier au choix le troisième microphone (23) et le troisième haut-parleur (43) avec le téléphone (35).

6. Système d'assistance vocale selon la revendication 5, **caractérisé en ce qu'**une confirmation haptique, visuelle et/ou sonore d'une utilisation réussie de l'élément de commande (31, 32) peut être générée au moyen du système d'assistance vocale.
